Europäisches Patentamt

European Patent Office

Office européen des brevets

(19)

(11) Numéro de publication : **0 073 868**
**B1**

(12)

# FASCICULE DE BREVET EUROPÉEN

(45) Date de publication du fascicule du brevet :
**12.11.86**

(51) Int. Cl.⁴ : **B 29 C 45/14**

(21) Numéro de dépôt : **81401388.4**

(22) Date de dépôt : **04.09.81**

(54) **Moule pour la fabrication d'une semelle.**

(43) Date de publication de la demande :
**16.03.83 Bulletin 83/11**

(45) Mention de la délivrance du brevet :
**12.11.86 Bulletin 86/46**

(84) Etats contractants désignés :
**AT BE CH DE FR GB IT LI LU NL SE**

(56) Documents cités :
**CH-A- 502 076**
**DE-A- 1 685 251**
**DE-A- 2 519 873**
**FR-A- 1 550 325**
**FR-A- 1 580 513**
**FR-A- 2 039 079**
**FR-A- 2 241 185**

(73) Titulaire : **POLYPLASTIFORM**
**38 rue Bouvet**
**F-26103 Romans (FR)**

(72) Inventeur : **Jourdan, Henri**
**Avenue Chateau Fleuri Lotissement du Levant**
**F-26100 Romans (FR)**

(74) Mandataire : **Chameroy, Claude et al**
**c/o Cabinet Malemont 42, avenue du Président Wilson**
**F-75116 Paris (FR)**

## Description

L'invention a pour objet un moule pour le moulage d'une semelle, en particulier pour sandale de femme, constituée d'un bloc moulé relativement rigide et d'un patin d'usure encastré dans le bloc de telle sorte que sa face supérieure soit au niveau de la surface du bloc, côté montage, le bloc formant ainsi autour du patin un anneau d'encastrement, ledit moule étant constitué par une matrice et un piston.

Le document allemand DE-A-2 519 873 décrit un tel moule et une telle semelle. La semelle selon ce document allemand apporte un progrès par rapport aux semelles classiques telles que décrites dans FR-A-1 550 325, FR-A-2 241 185 et CH-A-502 076, qui présentaient de nombreux inconvénients :

— tout d'abord, le matériau utilisé étant relativement rigide, la partie de la semelle sur laquelle repose la plante du pied manque de la souplesse nécessaire ;

— en second lieu, le patin d'usure qui est rapporté par encollage ou par accrochage augmente encore la rigidité, mais surtout, il est inesthétique puisqu'il constitue une surépaisseur non négligeable. Il peut également se détacher à l'usage ;

— enfin, la pose du patin d'usure est une opération indépendante, qui consomme de la matière première et qui prend un temps non négligeable, ceci au détriment du prix de revient de la chaussure.

Au contraire, la semelle selon le document allemand DE-A-2 519 873 est d'une plus grande souplesse dans sa partie située sous la plante des pieds puisqu'à ce niveau le bloc est réduit aux deux portions latérales d'un anneau d'encastrement ; la chaussure est plus esthétique du fait que l'épaisseur totale de la semelle ne dépasse pas l'épaisseur du patin d'usure. Enfin, le prix de revient est diminué puisque l'opération de pose du patin est supprimée, tandis que la qualité de la chaussure est améliorée du fait que le patin ne peut se détacher.

Toutefois, le moule utilisé ne donne pas satisfaction, car il ne s'adapte qu'à un seul modèle de patin d'usure.

L'invention a pour objet de remédier à cet inconvénient et pour ce faire elle vise un moule qui se caractérise en ce que la matrice comporte un logement ayant la forme du patin d'usure dont le fond est constitué par un élément amovible coulissant dans un puits creusé dans la matrice et réglable en hauteur grâce à des clinquants interposés entre l'élément amovible et le fond du puits, des moyens étant prévus pour solidariser ledit fond avec la matrice.

Grâce à cette disposition, il est possible d'adapter cas par cas le moule à des patins d'usure qui peuvent être d'épaisseurs différentes.

Un mode de réalisation de l'invention sera maintenant décrit à titre d'exemple non limitatif, en référence aux dessins annexés dans lesquels :

la figure 1 représente une semelle conforme à l'invention ;

la figure 2 représente en perspective à petite échelle et en position ouverte le moule utilisé pour fabriquer la semelle selon la figure 1 ;

la figure 3 est une coupe du même moule au cours de l'opération de moulage, et

la figure 4 est une coupe partielle à grande échelle.

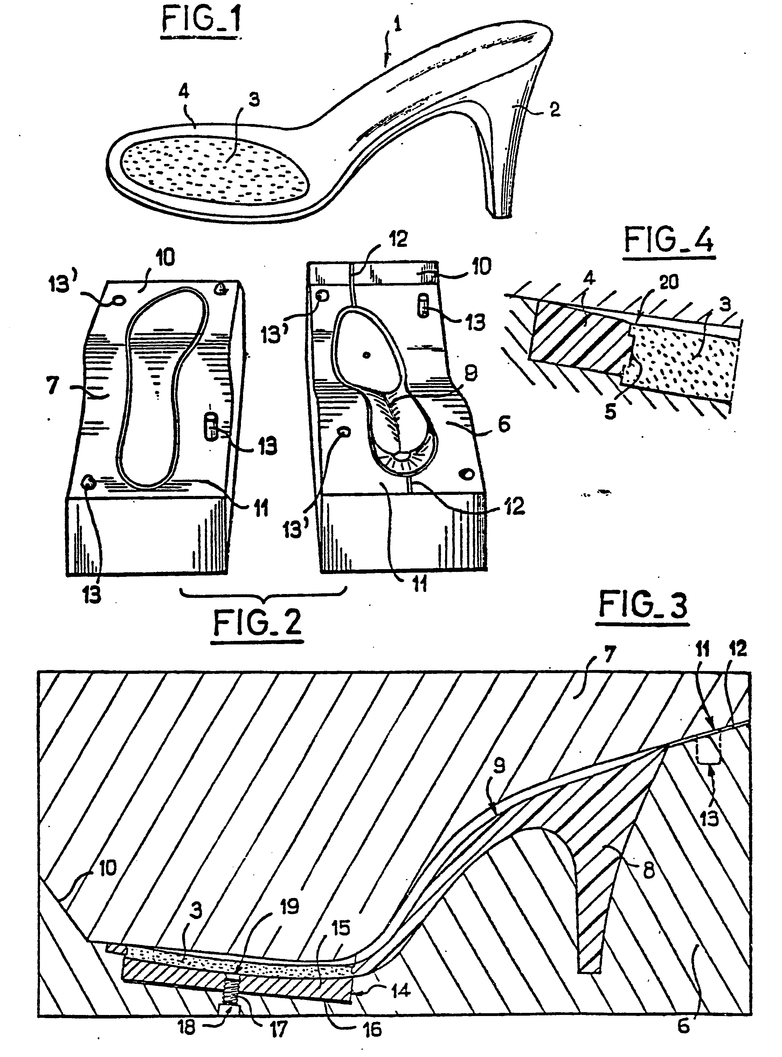

On voit en figure 1 une semelle pour sandale qui se compose d'un bloc 1 d'une seule pièce avec le talon 2, réalisé par moulage d'un matériau plastique tel qu'une polyamide qui donne à la fois un fini convenable et la nécessaire rigidité.

Conformément à l'invention, le patin d'usure 3 qui est généralement constitué d'un élastomère thermoformable n'est pas collé ou agrafé sous le bloc 1, mais encastré à l'intérieur d'un anneau 4 venu du moulage avec le bloc.

Pour réaliser dès à présent comment le patin d'usure 3 et l'anneau 4 sont reliés l'un à l'autre, on se reportera à la coupe agrandie selon la figure 4 qui représente partiellement les deux éléments du moule ainsi que le patin d'usure 3 et l'anneau 4 au moment du moulage. On voit sur cette figure que le patin d'usure a été pourvu à la fabrication d'une cannelure 5 destinée à améliorer l'accrochage et qui se remplit au moulage du matériau constituant le bloc qui se soude au matériau constituant le patin.

La figure 2 représente un moule dont la conception générale est parfaitement classique. On sait qu'un tel moule est constitué d'une matrice 6 et d'un piston 7. La matrice 6 est une masse à section rectangulaire dans laquelle est creusé un espace 8 définissant la forme de la partie inférieure de la sandale. Le piston, à son tour, est un bloc à section rectangulaire creusé d'un espace 9 qui définit la forme de la partie supérieure de la sandale. Les deux éléments 6 et 7 s'encastrent l'un dans l'autre par une série de plans inclinés tels que 10 et 11 dans lesquels sont taillés un ou plusieurs canaux tel que 12 pour l'amenée du matériau constituant le bloc. L'ensemble est complété par une série de goupilles telles que 13, solidaires soit de la matrice, soit du piston, et coopérant avec les alésages correspondants 13 pour assurer le coulissement et le positionnement du piston par rapport à la matrice.

Conformément à l'invention et comme on le voit mieux à la figure 3, la matrice comporte un puits 14 cylindrique dont la section est celle d'un patin d'usure. Ce puits reçoit un élément amovible 15 qui peut s'y enfoncer plus ou moins profondément grâce à l'interposition de clinquants 16 entre le fond du puits et la face inférieure de l'élément 15. Lorsque la position définitive souhaitée pour l'élément 15 est obtenue, sa fixation est assurée par une vis 17 manœuvrée grâce à un trou borgne 18 et dont l'extrémité est ensuite arasée en 19.

De son côté, le piston 7 comporte au droit de la périphérie du puits 14, un léger bossage 20, qui apparaît mieux sur la coupe à grande échelle de la figure 4. Ce moule s'utilise de la façon suivante : on règle d'abord comme indiqué ci-dessus, la position de l'élément 15, de façon à constituer un logement pour le patin d'usure 3, de hauteur telle que le patin d'usure vienne au niveau de la face supérieure de la semelle terminée. On dispose ensuite le patin d'usure dans son logement et on procède à la fermeture du moule de façon classique. Le bossage 20 vient alors presser la périphérie supérieure du patin. L'on procède enfin au moulage de la façon habituelle. Le matériau constituant le bloc se moule classiquement au niveau de la cambrure et du talon. Au niveau de la plante du pied, ce matériau emplit le canal qu'il trouve libre autour du patin 3 pour constituer l'anneau d'encastrement 4. Il pénètre dans la cannelure 5 et la température de moulage est telle qu'il y a soudage entre ce matériau et l'élastomère constituant le patin tout au long de la tranche de ce dernier, y compris la cannelure.

Par contre, grâce à la compression exercée par le bossage 20, le matériau constituant le bloc ne peut absolument pas fluer au-dessus du patin d'usure.

Comme on le voit, une opération de moulage tout aussi simple que l'opération classique permet ainsi d'obtenir sans dépense supplémentaire, ni en matière, ni en main d'œuvre, une semelle qui possède à la fois la rigidité indispensable sur sa partie arrière (cambrure et talon), et une grande souplesse inconnue jusqu'alors sur sa partie avant. Cette semelle est en outre plus esthétique, car elle est plus fine et plus solide, car le patin d'usure est parfaitement solidaire du bloc.

## Revendication

Moule pour le moulage d'une semelle, en particulier pour sandale de femme, constituée d'un bloc (1) moulé relativement rigide et d'un patin d'usure (3) encastré dans le bloc de telle sorte que sa face supérieure soit au niveau de la surface du bloc, côté montage, le bloc formant ainsi autour du patin un anneau d'encastrement (4), ledit moule étant constitué par une matrice (6) et un piston (7), caractérisé en ce que la matrice comporte un logement ayant la forme du patin d'usure (3) dont le fond est constitué par un élément amovible (15) coulissant dans un puits (14) creusé dans la matrice et réglable en hauteur grâce à des clinquants (16) interposés entre l'élément amovible et le fond du puits, des moyens (17) étant prévus pour solidariser ledit fond avec la matrice.

## Claim

A mould for moulding a sole, particularly for women's sandals, formed by a relatively rigid moulded block (1) and a wear pad (3) which is embedded in the block in such a way that the upper face of the pad is flush with the block surface, on the mounting side, whereby the block defines an embedding ring part (4) around the pad said mould being composed of a die (6) and a piston (7), characterized in that the die is provided with a housing shaped as the wear pad (3), the bottom of this housing being formed by a separable member (15) which is slidable within a well (14) bored in the die and which is ajustable in height by means of foil members (16) placed between the separable member and the bottom of the well, means (17) being provided for securing said bottom to the die.

## Patentanspruch

Form zum Gießen einer Sohle, insbesondere für eine Damensandale, die von einem aus einem relativ steifen Material gegossenen Block (1) und einer Verschleißsohle (3) besteht, die in den Block derart eingelassen ist, daß ihre Oberseite in Höhe der Oberseite des Blocks liegt, so daß montageseitig der Block um die Sohle einen Umfassungsrahmen (4) bildet, wobei die Form aus einem Untergesenk und einem Druckstempel (7) besteht, dadurch gekennzeichnet, daß das Untergesenk einen Sitz aufweist, der die Form der Verschleißsohle (3) aufweist, dessen Boden von einem abnehmbaren Element (15) gebildet ist, das in einer Bohrung (14) gleitet, die in dem Untergesenk ausgebildet ist, und das aufgrund von Beilagensätzen (16), die zwischen dem abnehmbaren Element und dem Boden der Bohrung angeordnet sind, in der Höhe einstellbar ist, wobei Mittel (17) vorgesehen sind, um den genannten Boden mit dem Untergesenk fest zu verbinden.

FIG_1

FIG_4

FIG_2

FIG_3